# EUROPÄISCHE PATENTSCHRIFT

(11) **EP 0 897 668 B1**
(45) Veröffentlichungstag und Bekanntmachung des Hinweises auf die Patenterteilung: **24.10.2001**
(21) Anmeldenummer: 98108743.0
(22) Anmeldetag: 14.05.1998
(51) Int. Cl.: A22C 11/00

(54) **Verriegelungseinrichtung**
Locking device
Dispositif de verrouillage

(30) Priorität: 21.08.1997 DE 29714951 U
(43) Veröffentlichungstag der Anmeldung: 24.02.1999
(73) Patentinhaber: VEMAG Maschinen- und Anlagenbau GmbH, 27283 Verden (DE)
(72) Erfinder: Frerichs, Heyo, 27283 Verden (DE); Zerbst, Oliver, 27283 Verden (DE); Pankoke, Uwe, 27336 Rethem (DE)
(74) Vertreter: Eisenführ, Speiser & Partner

(56) Entgegenhaltungen:
- EP-A- 0 230 935
- US-A- 3 147 890
- US-A- 3 450 180

## Beschreibung

Die Erfindung betrifft eine Verriegelungseinrichtung für ein Schwenkteil, das um eine an einem Rahmenteil angeordnete Drehachse schwenkbar ist und insbesondere eine Verriegelungseinrichtung für den abklappbaren Fülltrichter einer Wurstfüllmaschine gemäß dem Oberbegriff des Anspruchs 1.

In der Praxis tritt häufig das Problem auf, daß ein schwenkbares Maschinenteil an einem Maschinenrahmen fest verriegelt werden muß. So ist es beispielsweise bei bekannten Wurstfüllmaschinen notwendig, daß der von dem Gehäuserahmen der Maschine abklappbare Fülltrichter während des Maschinenbetriebs an dem Gehäuserahmen fest verriegelt ist, damit das in der Füllmaschine vorhandene Vakuum gegenüber der Umgebung durch die Abdichtung zwischen Gehäuserahmen und Fülltrichter sicher abgedichtet wird.

Hierfür ist in der Praxis eine Verriegelungseinrichtung bekannt, die an dem Fülltrichter zwei gemeinsam betätigbare Verriegelungsklauen und zwei am Gehäuserahmen vorgesehene Verriegelungsbolzen umfaßt. Die Innenkontur der Verriegelungsklauen ist jeweils so auf die Außenkontur der Verriegelungsbolzen abgestimmt, daß die Klauen beim Verriegelungsvorgang, bei dem sie von Hand aus einer Öffnungsstellung (in der der Fülltrichter bereits auf dem Gehäuserahmen und die Klauen auf den Bolzen aufsitzen) in eine Verriegelungsstellung reversibel um die Verriegelungsbolzen schwenkbar sind, den Fülltrichter dicht an den Gehäuserahmen ziehen und in der Verriegelungsstellung ein Abheben des Trichters von dem Gehäuserahmen verhindern.

Hierbei hat es sich als problematisch erwiesen, daß der Fülltrichter in der herabgeschwenkten, aber noch nicht verriegelten Stellung nicht plan aufsitzt. Dies führt wiederum dazu, daß die Verriegelungsklauen ebenfalls nicht auf den Verriegelungsbolzen flächig aufliegen, sondern die Bolzen teilweise nur linienförmig berühren.

Insbesondere bei Wurstfüllmaschinen sind auf Grund der an diese Maschinenart gestellten hohen Hygieneanforderungen sowohl die Verriegelungsklauen als auch die Verriegelungsbolzen häufig aus Edelstahl ausgeführt. Dies führt wiederum dazu, daß beim Verriegeln aufgrund des lokal hohen Drucks, der durch die linienförmige Anlage der Verriegelungsklauen an den Verriegelungsbolzen entsteht, eine der Verriegelungsbewegung entgegenwirkende, hohe Reibungskraft hervorgerufen wird. Diese Reibungskraft muß durch eine entsprechend große Betätigungskraft von der Bedienungsperson überwunden werden. Darüberhinaus führt dies zu einem dementsprechend hohen Verschleiß an den Kontaktflächen von Klauen und Bolzen, was auch die Hygiene beeinträchtigen kann, da sich in den hierbei entstehenden Verschleißriefen Schmutz dauerhaft anlagern kann.

Es ist Aufgabe der vorliegenden Erfindung, eine Verriegelungseinrichtung der eingangs genannten Art zu schaffen, die bei sicherer Verriegelung und leichter Betätigbarkeit einen geringen Verschleiß an den Verriegelungsbauteilen hervorruft.

Die vorstehende Aufgabe kann grundsätzlich auf zwei verschiedenen Wegen gelöst werden, die in den Ansprüchen 1 und 2 wiedergegeben sind. So kann zum einen vorgesehen sein, daß an dem undrehbaren Verriegelungsbolzen zumindest in dem Angriffsbereich der Verriegelungsklaue wenigstens ein um die Bolzenachse des Verriegelungsbolzens drehbares Zwischenelement vorgesehen ist. Zum anderen kann die vorstehende Aufgabe auch dadurch gelöst werden, daß der Verriegelungsbolzen mittels eines Zwischenelements um seine Bolzenachse drehbar gehalten ist. In beiden Fällen kann die Verriegelungsklaue an dem Schwenkteil oder dem Rahmenteil und demzufolge der Verriegelungsbolzen an dem Rahmenteil oder dem Schwenkteil angeordnet sein.

Durch das Zwischenelement werden die bei den bekannten Verriegelungseinrichtungen zwischen der jeweiligen Verriegelungsklaue und dem zugehörigen Verriegelungsbolzen auftretenden hohen Reibungskräfte weitestgehend beseitigt, da die Drehbewegung der Verriegelungsklaue oder des Verriegelungsbolzens von dem ortsfesten Verriegelungsbolzen oder der ortsfesten Halteeinrichtung für den Verriegelungsbolzen entkoppelt wird. Hierdurch muß gegenüber den bekannten Verriegelungseinrichtungen von der Bedienungsperson nur eine geringe Betätigungskraft beim Verriegeln oder Öffnen aufgebracht werden. Des weiteren verringert sich der Verschleiß an den Kontaktflächen von Klaue und Bolzen, so daß die Lebensdauer dieser beiden Bauteile zunimmt. Auf Grund des deutlich geringeren Verschleißes treten schließlich auch keine Hygieneprobleme auf.

Das Zwischenelement kann durch die unterschiedlichsten Bauteile gebildet sein. Beispielsweise kann das Zwischenelement entweder ein Wälzlager oder ein Gleitlager sein.

Wie bereits vorstehend dargelegt worden ist, kann nicht immer sichergestellt werden, daß die Verriegelungsklaue im richtigen Winkel an dem Verriegelungsbolzen bzw. Zwischenelement angreift. Damit ein Winkelausgleich zwischen dem Verriegelungsbolzen und der Verriegelungsklaue stattfinden kann, kann weiterhin vorgesehen sein, daß das Zwischenelement winkelbeweglich ist.

Um das Lager während des Betriebs der Füllmaschine vor Verschmutzung zu schützen, kann weiterhin vorgesehen sein, daß auf das Zwischenelement eine insbesondere an einer Stirnseite verschlossene Buchse aufgeschoben ist, die das Zwischenelement vorzugsweise vollständig umschließt. Beim Verriegeln der Verriegelungseinrichtung setzt die Verriegelungsklaue auf der Buchse auf, die zusammen mit der Verriegelungsklaue infolge des als Zwischenelement vorgesehenen Lagers durch die Klaue in die Verriegelungsstellung mitgenommen wird.

Durch die Buchse besteht weiterhin die Möglichkeit, die Materialauswahl des Zwischenelements freier zu gestalten, da lediglich sichergestellt sein muß, daß die Buchse selbst aus Edelstahl hergestellt ist.

Damit das Zwischenelement leicht zu montieren ist, kann weiterhin vorgesehen sein, daß der Verriegelungsbolzen einen ersten Bolzenabschnitt, mit dem er am Rahmenteil oder am Schwenkteil gehalten ist, sowie einen zweiten Bolzenabschnitt mit einem kleineren Durchmesser als der erste Bolzenabschnitt aufweist, an dem der Angriffsbereich der Verriegelungsklaue vorgesehen ist, und daß die Buchse einen Innendurchmesser gleich oder geringfügig größer als der Außendurchmesser des Verriegelungsbolzens im Bereich des ersten Bolzenabschnitts besitzt.

Weitere vorteilhafte Ausgestaltungen sowie ein Ausführungsbeispiel werden nachstehend anhand der Zeichnungsfigur erläutert. Hierbei zeigt:
- Figur 1: eine Ansicht einer Wurstfüllmaschine mit einer erfindungsgemäßen Verriegelungseinrichtung;
- Figur 2: eine Ausschnittsvergrößerung aus der Figur 1 zur Erläuterung der Anordnung der erfindungsgemäßen Verriegelungseinrichtung an der Füllmaschine;
- Figur 3: eine teilweise aufgebrochene Ansicht von oben auf eine erfindungsgemäße Verriegelungseinrichtung;
- Figur 4: eine Ansicht entlang der Schnittlinie IV-IV in Figur 3, wobei die erfindungsgemäße Verriegelungseinrichtung in ihrer Öffnungsstellung wiedergegeben ist;
- Figur 5: eine zu Figur 4 ähnliche Darstellung mit dem Unterschied, daß die erfindungsgemäße Verriegelungseinrichtung in ihrer Verriegelungsstellung wiedergegeben ist;
- Figur 6: eine Seitenansicht einer Füllmaschine mit einer weiteren Einsatzmöglichkeit der erfindungsgemäßen Verriegelungseinrichtung; und
- Figur 7: ein weiteres Ausführungsbeispiel einer erfindungsgemäßen Verriegelungseinrichtung.

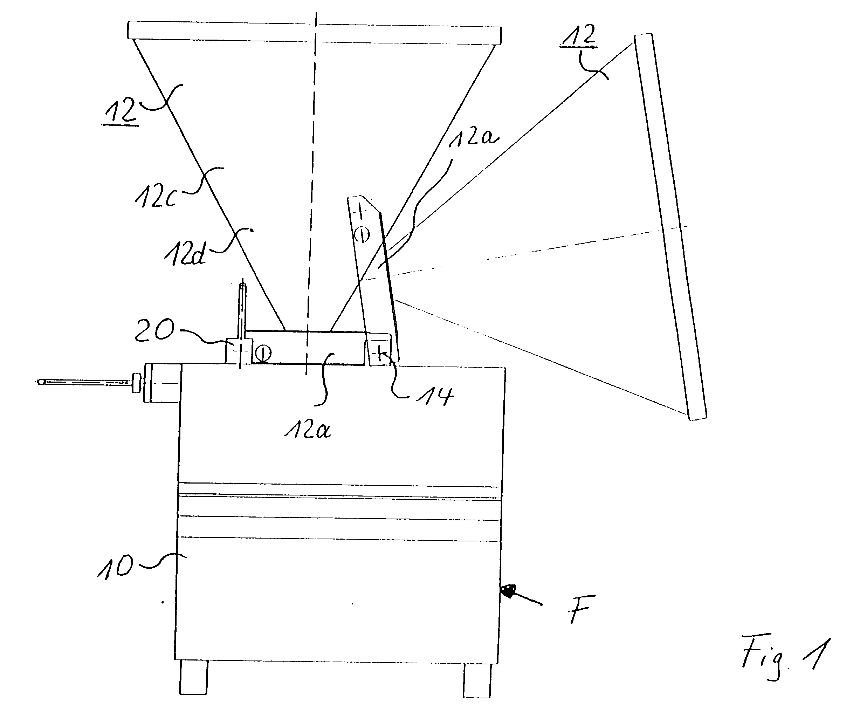

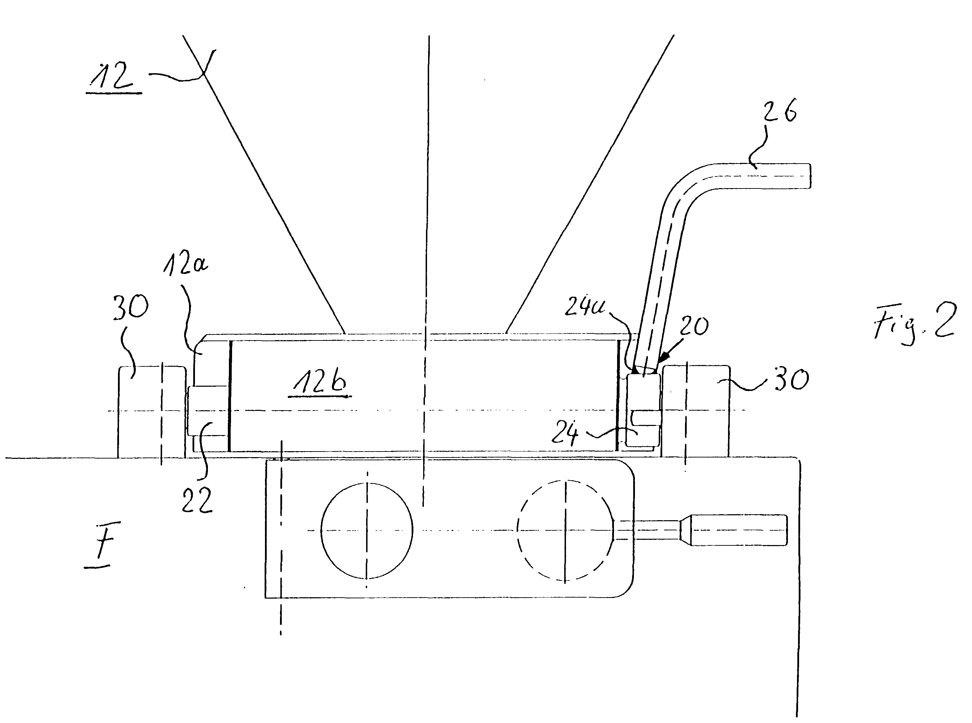

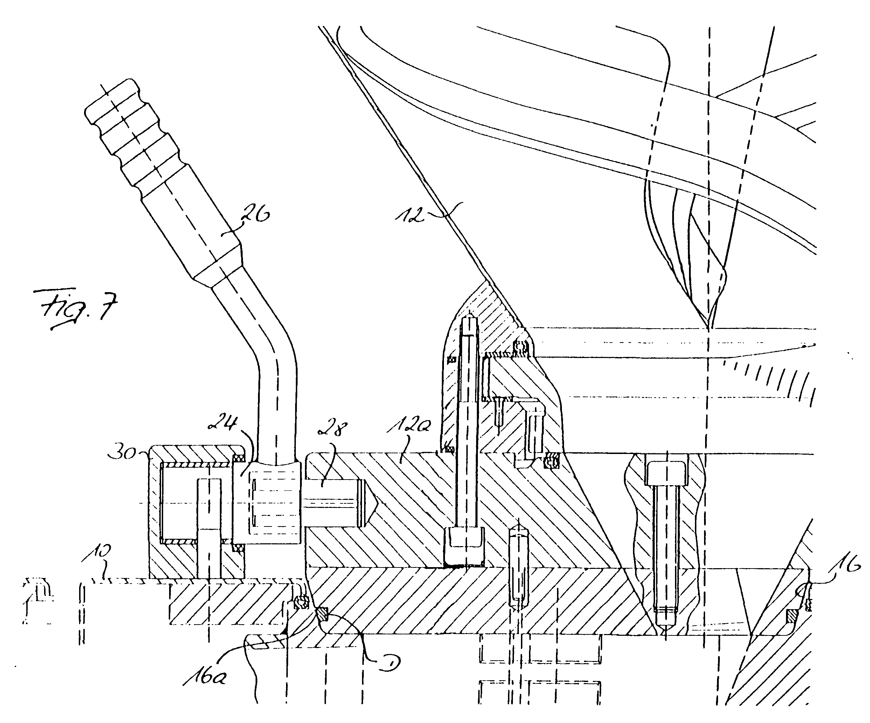

In der Figur 1 und 2 ist eine Wurstfüllmaschine F gezeigt, bei der eine erfindungsgemäße Verriegelungseinrichtung eingesetzt ist. Die Füllmaschine F umfaßt im wesentlichen einen verkleideten Gehäuserahmen 10 zur Aufnahme u.a. der nicht weiter bezeichneten eigentlichen Abfülleinrichtung, der Antriebe und Steuerungen hierfür usw. sowie einen Fülltrichter 12 zur Aufnahme des abzufüllenden Wurstbräts. Der Fülltrichter 12 ist um eine in Figur 1 nur schematisch angedeutete Schwenkachse 14 aus einer Betriebsstellung, in der er mit seinem kegelstumpfförmigen Zuführstutzen 12a teilweise in eine auf der Oberseite des Gehäuserahmens 10 vorgesehene und sich in das Innere des Gehäuserahmens 10 konisch verjüngende Einfüllöffnung 16 hineingreift, in eine Außerbetriebsstellung um ca. 90° nach rechts, bezogen auf Figur 1, reversibel abklappbar (vgl. auch Fig. 7). Der Zuführstutzen 12a ist mit einer Ringdichtung D versehen (vgl. Fig. 7), die in der Betriebsstellung des Fülltrichters 12 in der Einfüllöffnung 16 des Gehäuserahmens 10 sitzt und dort in Anlage an der Innenumfangswand 16a der Einfüllöffnung 16 diese Öffnung 16 abdichtet.

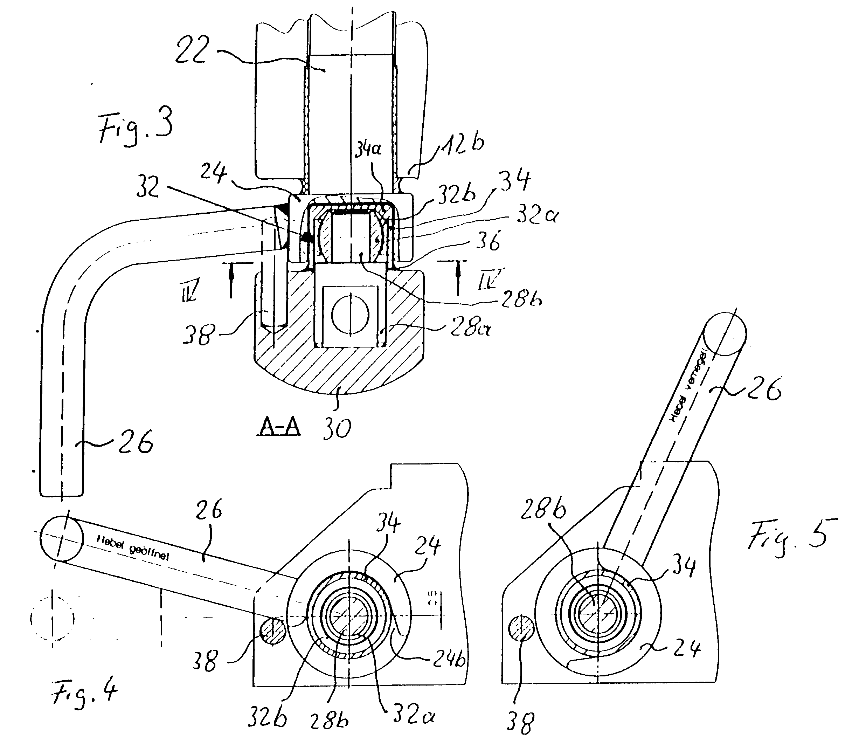

Damit der Fülltrichter 12 während des Betriebs der Füllmaschine F dicht auf der Einfüllöffnung 16 des Gehäuserahmens 10 aufsitzt, ist eine Verriegelungseinrichtung 20 vorgesehen. Die Verriegelungseinrichtung 20 umfaßt, wie dies insbesondere aus Figur 2 hervorgeht, eine parallel zur Schwenkachse 14 verlaufende Verriegelungswelle 22, die in einem Wellengehäuse 12b an dem Zuführstutzen 12a des Fülltrichters 12 drehbar gelagert ist. An ihren beiden stirnseitigen Enden ist die Verriegelungswelle 22 mit je einer Verriegelungsklaue 24 aus Edelstahl versehen, deren nähere Ausgestaltung im Zusammenhang mit den Figuren 3 bis 5 nachstehend erläutert wird. Von der Außenumfangsfläche 24a der, bezogen auf Figur 2, rechten Verriegelungsklaue 24 steht ein Verriegelungshebel 26 ab, der drehfest an dieser Verriegelungsklaue 24, insbesondere durch einen Schweißvorgang angebracht ist.

Die Verriegelungsklauen 24 umfassen in Figur 2 nicht näher gezeigte, zylindrische Verriegelungsbolzen 28 aus Edelstahl, die jeweils in entsprechenden Bolzenhalteböcken 30, die an der Oberseite des Gehäuserahmens 10 der Füllmaschine F angebracht sind, in der Weise drehfest sowie axial fest gehalten sind, daß ihre Bolzenachsen zumindest annährend mit der Wellenachse der Verriegelungswelle 22 fluchten.

Im Zusammenhang mit den Figuren 3 bis 5 wird nun eine der beiden Verriegelungsklauen 24 und einer der beiden Verriegelungsbolzen 28 erläutert. Die in diesem Zusammenhang erfolgenden Erläuterungen gelten in gleicher Weise für das jeweils andere, in Figur 3 nicht sichtbare Bauteil 24, 28.

Wie aus Figur 3 hervorgeht, weist der Verriegelungsbolzen 28 einen in dem Bolzenhaltebock 30 aufgenommenen ersten Bolzenabschnitt 28a und einen aus dem Bolzenhaltebock 30 hervorstehenden zweiten Bolzenabschnitt 28b auf, an dem die Verriegelungsklaue 24 zum Verriegeln angreift und der somit den eigentlichen Verriegelungsbolzen bildet. Der erste Bolzenabschnitt 28a besitzt einen größeren Außendurchmesser als der zweite Bolzenabschnitt 28b. Der Verriegelungsbolzen 28 ist in dem Bolzenhaltebock 30 durch eine entsprechende formschlüssige Ausgestaltung drehfest und axial fest angeordnet.

Auf dem aus dem Bolzenhaltebock 30 hervorstehenden zweiten Bolzenabschnitt 28b des Verriegelungsbolzens 28 sitzt ein aus Kunststoff hergestellter Innenring 32a eines Gelenkgleitlagers 32 axial fest auf. Die axiale Sicherung des Innenrings 32a des Gelenkgleitlagers 32 erfolgt in dem hier gezeigten Ausführungsbeispiel durch eine entsprechende Auswahl der Passung zwischen der Innenumfangsfläche des Innenringes 32a und der Außenumfangsfläche des zweiten Bolzenabschnittes 28b des Verriegelungsbolzens 28. Beispielsweise kann eine Passung H7/f7 oder H7/k7 vorgesehen sein. Der Absatz zwischen dem erstem und dem zweiten Bolzenabschnitt 28a, 28b dient zur Positionierung des Innenrings 32a bei dessen Montage auf dem zweiten Bolzenabschnitt 28b. Die Außenumfangsoberfläche des Innenrings 32a weist im Querschnitt betrachtet eine konvexe Wölbung auf.

Ein ebenfalls aus Kunststoff bestehender Außenring 32b des Gelenkgleitlagers 32 ist wiederum an seiner Innenumfangsfläche mit einer, im Querschnitt betrachtet, konkaven Ausnehmung versehen, deren Kontur mit der der konvexen Wölbung des Innenrings 32a des Gelenklagers 32 übereinstimmt, so daß eine Winkelbeweglichkeit des Lagers 32 gegeben ist.

Der Außenring 32b des Gelenkgleitlagers 32 ist in einer einseitig offenen, zylindrischen Buchse 34 aus Edelstahl drehfest sowie axial fest aufgenommen, die das Gelenkgleitlager 32 vollständig umgibt, wie dies insbesondere aus Figur 3 hervorgeht. Die axiale und drehfeste Sicherung des Außenrings 32b des Gelenkgleitlagers 32 erfolgt in dem hier gezeigten Ausführungsbeispiel durch eine entsprechende Auswahl der Passung zwischen der Außenumfangsfläche des Außenringes 32b und der Innenumfangsfläche der Buchse 34, die ähnlich zu der vorstehend im Zusammenhang mit der Passung für den Innenring 32a ausgewählt sein kann. Die Buchse 34 besitzt in der Nähe ihres Bodens 34a einen nicht näher bezeichneten Absatz, der ebenfalls als Montagehilfe für den Außenring 32b dient.

Die Buchse 34 ist in der Weise auf den zweiten Bolzenabschnitt 28b bzw. auf das dort angeordnete Gelenkgleitlager 32 aufgesetzt, daß die Buchse 34 mit ihrem Boden 34a das Gelenkgleitlager 32 und den zweiten Bolzenabschnitt 28b nach außen abschließt. Weiterhin übergreift die Buchse 34 mit Ihrem freien Ende den aus dem Bolzenhaltbock 30 hervorstehenden Teil des ersten Bolzenabschnitts 28a des Verriegelungsbolzens 28. Zwischen der Außenumfangsfläche der Buchse 34 und der zu der Verriegelungswelle 22 weisenden Seite des Bolzenhaltebocks 30 ist ein ringförmiges Dichtelement 36 vorgesehen, welches ein Eindringen von Schmutz in den Raum für das Gelenkgleitlager 32 verhindert.

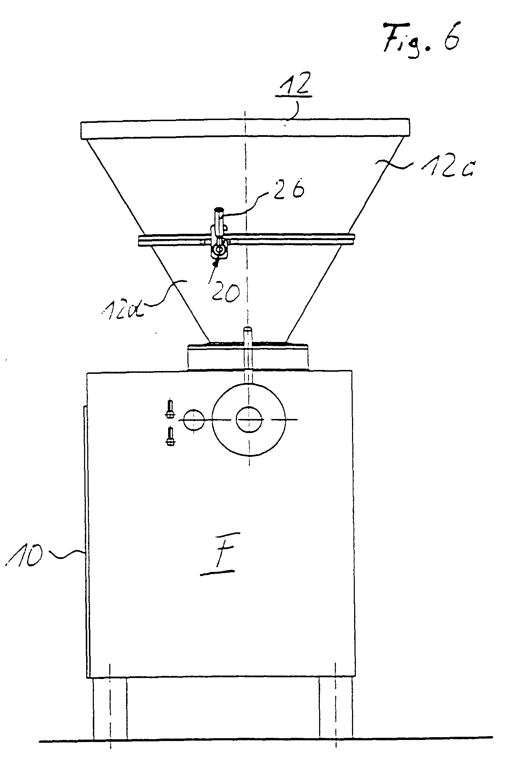

Wie aus den Figuren 4 und 5 hervorgeht, besitzt die Verriegelungsklaue 24 einen Öffnungswinkel von ca. 180°. An dem einen Umfangsende der Verriegelungsklaue 24 ist an der Außenumfangsfläche 24a der Verriegelungshebel 26 angebracht, der, wie dies insbesondere aus Figur 3 entnehmbar ist, in einem spitzen Winkel zu der Außenumfangsoberfläche 24a der Verriegelungsklaue 24 befestigt ist. Das andere Umfangsende der Verriegelungsklaue 24 ist an seiner Innenumfangsfläche mit einer Anfasung 24b versehen, die ein Aufsetzen der Verriegelungsklaue 24 auf die Buchse 34 beim Aufsetzen des Fülltrichters 12 auf die Einfüllöffnung 16 des Gehäuserahmens 10 erleichtert.

Die Verriegelungsklaue 24 besitzt an ihrer Innenumfangsfläche eine solche Kontur, daß bei auf die Buchse 34 und damit auf den Verriegelungsbolzen 28 aufgesetzter, aber noch nicht verriegelter Klaue 24 ein Spiel zur Außenumfangsfläche der Buchse 34 bestehen bleibt, wie dies in Figur 4 erkennbar ist. Dieses Spiel ermöglicht beim Verriegeln ein Hineinziehen des Fülltrichters 12 in die Einfüllöffnung 16 im Gehäuserahmen 10 und damit ein dichtes Anliegen des an dem Zuführstutzen 12a des Trichters 12 vorgesehen Dichtelements D an der Innenumfangswand 16a der Einfüllöffnung 16.

Es ist noch zu bemerken, daß in dem Bolzenhaltebock 30 ein über den Bolzenhalteblock 30 überstehender Anschlagbolzen 38 eingesetzt ist, der die Drehbewegung der Verriegelungsklaue 24 in Richtung ihrer Öffnungsstellung begrenzt (vgl. Fig. 3 u. 4) und vorteilhafterweise auch als Öffnungshilfe wirkt.

Wie aus den Figuren 4 und 5 hervorgeht, wird zum Verriegeln der erfindungsgemäßen Verriegelungseinrichtung 20 die Verriegelungsklaue 24 (bzw. die beiden Verriegelungsklauen 24 der Verriegelungswelle 22) auf die Außenumfangsfläche der jeweiligen Buchse 34 in der Weise aufgesetzt, daß die Verriegelungsklaue 24, bezogen auf Figur 4, nach unten offen ist. Der Hebel 26 liegt dabei an dem Anschlagbolzen 38 an, wie dies in Figur 4 gezeigt ist. Zum Verriegeln der Verriegelungseinrichtung 20 wird der Hebel 26 nach, bezogen auf Figur 4, rechts geschwenkt, bis die dem Verriegelungshebel 26 gegenüberliegende Anfasung 24b der Verriegelungsklaue 24 unter den Verriegelungsbolzen 28 bzw. die Buchse 34 gefahren ist, wie dies in Figur 5 gezeigt ist. Aufgrund des vorstehend erwähnten, beim Aufsetzen der Verriegelungsklaue 24 auf den Verriegelungsbolzen 28 zwischen der Verriegelungsklaue 24 und der Buchse 34 vorhandenen Spiels kann der Fülltrichter 12 mit dem Dichtelement D in die Einfüllöffnung 16 des Gehäuserahmens 10 gezogen werden, so daß der Fülltrichter 12 dicht mit seinem Zuführstutzen 12a in der Einfüllöffnung 16 des Gehäuserahmens 10 sitzt.

Da sich die Buchse 34 während der Drehbewegung der Verriegelungsklaue 24 auf Grund des Gelenkgleitlagers 32 mitdreht, können die bei dieser Drehbewegung auftretenden Kräfte weder an der Innenumfangsfläche des Verriegelungsbolzens 24 noch an der Außenumfangsfläche der Buchse 34 Verschleiß unabhängig davon hervorrufen, ob die Innenumfangsfläche der Verriegelungsklaue 24 flächig oder nur linienförmig auf der Außenumfangsfläche der Buchse 34 aufsitzt. Hierdurch verringern sich nicht nur die für das Schließen oder Öffnen aufzubringenden Kräfte, sondern es steigert sich im erheblichen Maße die Lebensdauer der Verriegelungseinrichtung und die Hygiene.

In Figur 6 ist eine weitere Einsatzmöglichkeit der erfindungsgemäßen Verriegelungseinrichtung 20 gezeigt. Hierbei ist die Verriegelungseinrichtung 20 an dem Unterteil 12d des Fülltrichters 12 angebracht, um das abklappbare Oberteil 12c gegenüber dem Unterteil 12d zu verriegeln.

Grundsätzlich besteht auch die Möglichkeit, daß die Verriegelungsklaue 24 und der Verriegelungshebel 26 an dem Gehäuserahmen 10 gelagert sind und der Verriegelungsbolzen 28 zusammen mit dem Fülltrichter 12 verschwenkt wird. Dies ist in Figur 7 schematisch gezeigt.

## Patentansprüche

1. Verriegelungseinrichtung für ein Schwenkteil (12), das um eine an einem Rahmenteil (10) angeordnete Drehachse (14) schwenkbar ist, insbesondere für den Fülltrichter (12) einer Wurtsfüllmaschine (F), bei der an dem Schwenkteil (12) oder dem Rahmenteil (14) wenigstens eine aus einer Öffnungsstellung in eine Verriegelungsstellung reversibel drehbare Verriegelungsklaue (24) vorgesehen ist, die in der Verriegelungsstellung das Schwenkteil (12) an mindestens einem an dem Rahmenteil (10) oder dem Schwenkteil (12) angeordneten Verriegelungsbolzen (28) fest verriegelt,
**dadurch gekennzeichnet, daß** an dem undrehbaren Verriegelungsbolzen (28) zumindest in dem Angriffsbereich der Verriegelungsklaue (24) wenigstens ein um die Bolzenachse des Verriegelungsbolzens (28) drehbares Zwischenelement (32) vorgesehen ist.

2. Verriegelungseinrichtung nach dem Oberbegriff des Anspruchs 1,
**dadurch gekennzeichnet, daß** der Verriegelungsbolzen (28) mittels eines Zwischenelements (32) um seine Bolzenachse drehbar gehalten ist.

3. Verriegelungseinrichtung nach Anspruch 1 oder 2,
**dadurch gekennzeichnet, daß** das Zwischenelement ein Wälzlager ist.

4. Verriegelungseinrichtung nach Anspruch 1 oder 2,
**dadurch gekennzeichnet, daß** das Zwischenelement ein Gleitlager (32) ist.

5. Verriegelungseinrichtung nach einem der Ansprüche 1 bis 4,
**dadurch gekennzeichnet, daß** das Zwischenelement (32) winkelbeweglich ist.

6. Verriegelungseinrichtung nach einem der Ansprüche 1 bis 5,
**dadurch gekennzeichnet, daß** auf das Zwischenelement (32) eine Buchse (34) aufgesetzt ist, an der die Verriegelungsklaue (24) angreift.

7. Verriegelungseinrichtung nach Anspruch 6,
**dadurch gekennzeichnet, daß** die Buchse (34) das Zwischenelement (32) zumindest nahezu vollständig umschließt.

8. Verriegelungseinrichtung nach Anspruch 6 oder 7,
**dadurch gekennzeichnet, daß** die Buchse (34) das Zwischenelement (32) abdichtet.

9. Verriegelungseinrichtung nach einem der Ansprüche 6 bis 7,
**dadurch gekennzeichnet, daß** die Buchse (34) aus Edelstahl ist.

10. Verriegelungseinrichtung nach einem der Ansprüche 6 bis 9,
**dadurch gekennzeichnet, daß** der Verriegelungsbolzen (28) einen ersten Bolzenabschnitt (28a), mit dem er am Rahmenteil (10) oder am Schwenkteil (12) gehalten ist, sowie einen zweiten Bolzenabschnitt (28b) mit einem kleineren Durchmesser als der erste Bolzenabschnitt (28b) aufweist, an dem der Angriffsbereich der Verriegelungsklaue (24) vorgesehen ist, und daß die Buchse (34) einen Innendurchmesser gleich oder geringfügig größer als der Außendurchmesser des Verriegelungsbolzens (28) im Bereich des ersten Bolzenabschnitts (28a) besitzt.

11. Verriegelungseinrichtung nach einem der Ansprüche 1 bis 10,
**dadurch gekennzeichnet, daß** die Verriegelungsklaue (24) und/oder der Verriegelungsbolzen (28) aus Edelstahl sind.

12. Verriegelungseinrichtung nach einem der Ansprüche 1 bis 11,
**dadurch gekennzeichnet, daß** das Zwischenelement (32) zumindest teilweise aus Kunststoff ist.

13. Verriegelungseinrichtung nach einem der Ansprüche 1 bis 11,
**dadurch gekennzeichnet, daß** das Zwischenelement (32) zumindest teilweise mit Kunststoff beschichtet ist.

## Claims

1. A locking device for a pivotal part (12) which is pivotal about an axis of rotation (14) arranged on a frame part (10), in particular for the filling hopper (12) of a sausage filling machine (F), in which at least one locking claw (24) which may be rotated reversibly from an open position to a locking position is provided on the pivotal part (12) or the frame part (10) and, in the locking position, locks the pivotal part (12) fixedly to at least one locking pin (28) arranged on the frame part (10) or the pivotal part (12), **characterised in that** at least one intermediate element (32) which may be rotated about the pin axis of the locking pin (28) is provided on the non-rotatable locking pin (28) at least in the region of action of the locking claw (24).

2. A locking device according to the precharacterising clause of Claim 1, **characterised in that** the locking pin (28) is held by means of an intermediate element (32) such that it is rotatable about its pin axis.

3. A locking device according to Claim 1 or 2, **characterised in that** the intermediate element is a rolling bearing.

4. A locking device according to Claim 1 or 2, **characterised in that** the intermediate element is a sliding bearing (32).

5. A locking device according to one of Claims 1 to 4, **characterised in that** the intermediate element (32) is angularly movable.

6. A locking device according to one of Claims 1 to 5, **characterised in that** a sleeve (34) on which the locking claw (24) acts is set on the intermediate element (32).

7. A locking device according to Claim 6, **characterised in that** the sleeve (34) at least almost completely surrounds the intermediate element (32).

8. A locking device according to Claim 6 or 7, **characterised in that** the sleeve. (34) seals off the intermediate element (32).

9. A locking device according to one of Claims 6 to 7, **characterised in that** the sleeve (34) is made of high-grade steel.

10. A locking device according to one of Claims 6 to 9, **characterised in that** the locking pin (28) has a first pin section (28a) by means of which it is held against the frame part (10) or the pivotal part (12) and a second pin section (28b), having a smaller diameter than the first pin section (28a), on which the region of action of the locking claw (24) is provided, and **in that** the sleeve (34) has an internal diameter which is the same size or slightly larger than the external diameter of the locking pin (28) in the region of the first pin section (28a).

11. A locking device according to one of Claims 1 to 10, **characterised in that** the locking claw (24) and/or the locking pin (28) are made of high-grade steel.

12. A locking device according to one of Claims 1 to 11, **characterised in that** the intermediate element (32) is at least partly made of plastics.

13. A locking device according to one of Claims 1 to 11, **characterised in that** the intermediate element (32) is at least partly coated with plastics.

## Revendications

1. Dispositif de verrouillage pour une partie pivotante (12) qui peut pivoter autour d'un axe de rotation (14) situé au niveau d'une partie de bâti (10), en particulier pour la trémie d'alimentation (12) d'une machine de remplissage de saucisses (F), dans lequel est prévue, au niveau de la partie pivotante (12) ou de la partie de bâti (10) au moins une patte de verrouillage (24) pouvant pivoter de manière réversible d'une position d'ouverture à une position de verrouillage, laquelle patte verrouille solidement, dans la position de verrouillage, la partie pivotante (12) à au moins une barre de verrouillage (28) ménagée sur la partie de bâti (10) ou sur la partie pivotante (12), **caractérisé en ce qu'**au moins un élément intermédiaire (32) pouvant tourner autour de l'axe de la barre de verrouillage (28) est prévu sur la barre de verrouillage immobile (28), au moins dans la zone d'attaque de la patte de verrouillage (24).

2. Dispositif de verrouillage selon le préambule de la revendication 1, **caractérisé en ce que** la barre de verrouillage (28) est maintenue grâce à un élément intermédiaire (32) de manière à pivoter autour de son axe.

3. Dispositif de verrouillage selon la revendication 1 ou la revendication 2, **caractérisé en ce que** l'élément intermédiaire est un palier de roulement.

4. Dispositif de verrouillage selon la revendication 1 ou la revendication 2, **caractérisé en ce que** l'élément intermédiaire est un palier à glissement (32).

5. Dispositif de verrouillage selon l'une quelconque des revendications 1 à 4, **caractérisé en ce que** l'élément intermédiaire (32) peut effectuer un mouvement angulaire.

6. Dispositif de verrouillage selon l'une quelconque des revendications 1 à 5, **caractérisé en ce qu'**une bague (34) est posée sur l'élément intermédiaire (32), au niveau de laquelle vient en prise la patte de verrouillage (24).

7. Dispositif de verrouillage selon la revendication 6, **caractérisé en ce que** la bague (34) entoure au moins presque complètement l'élément intermédiaire (32).

8. Dispositif de verrouillage selon la revendication 6 ou la revendication 7, **caractérisé en ce que** la bague (34) rend l'élément intermédiaire (32) étanche.

9. Dispositif de verrouillage selon l'une quelconque des revendications 6 à 7, **caractérisé en ce que** la bague (34) est en acier fin.

10. Dispositif de verrouillage selon l'une quelconque des revendications 6 à 9, **caractérisé en ce que** la barre de verrouillage (28) présente une première section de barre (28a), grâce à laquelle la barre est maintenue à la partie de bâti (10) ou à la partie pivotante (12), ainsi qu'une seconde section de barre (28b) dont le diamètre est inférieur à celui de la première section de barre (28a), au niveau de laquelle est prévue la zone d'attaque de la patte de verrouillage (24), et **en ce que** la bague (34) possède un diamètre intérieur identique ou à peine supérieur au diamètre extérieur de la barre de verrouillage (28) dans la région de la première section de barre (28a).

11. Dispositif de verrouillage selon l'une quelconque des revendications 1 à 10, **caractérisé en ce que** la patte de verrouillage (24) et/ou la barre de verrouillage (28) sont en acier fin.

12. Dispositif de verrouillage selon l'une quelconque des revendications 1 à 11, **caractérisé en ce que** l'élément intermédiaire (32) est au moins en partie composé de matière plastique.

13. Dispositif de verrouillage selon l'une quelconque des revendications 1 à 11, **caractérisé en ce que** l'élément intermédiaire (32) est au moins partiellement recouvert de matière plastique.
